# EUROPÄISCHE PATENTSCHRIFT

(11) **EP 0 637 552 B1**
(45) Veröffentlichungstag und Bekanntmachung des Hinweises auf die Patenterteilung: **14.01.1998**
(21) Anmeldenummer: 94109236.3
(22) Anmeldetag: 16.06.1994
(51) Int. Cl.: B65D 88/16

(54) **Dosierpalette**
Dosingpallet
Palette de dosage

(30) Priorität: 02.08.1993 DE 4325908
(43) Veröffentlichungstag der Anmeldung: 08.02.1995
(73) Patentinhaber: CERDEC AKTIENGESELLSCHAFT KERAMISCHE FARBEN, D-60327 Frankfurt (DE)
(72) Erfinder: Berdel, Norbert, D-63179 Obertshausen (DE); Chojnowski, Marian, D-63599 Biebergemünd (DE)

(56) Entgegenhaltungen:
- WO-A-81/01278
- FR-A- 2 633 593
- FR-A- 2 644 135
- GB-A- 2 066 220
- GB-A- 2 250 016

## Beschreibung

Die Erfindung richtet sich auf eine Dosierpalette für sackförmige Großgebinde, womit eine Entnahme Von fließfähigem Schüttgut aus dem Großgebinde in dosierter Form möglich ist und nach Teilentnahme die Palette mit dem Gebinde transportiert und zwischengelagert werden kann.

Es ist bekannt, fließfähige Schüttgüter, in sackförmigen Großgebinden, meist werden diese als Bigbag bezeichnet, zu vermarkten. Großgebinde werden üblicherweise auf Paletten gelagert und mittels Flurfördergeräten, insbesondere Gabelstaplern, transportiert.

Großgebinde mit einem Volumen von etwa 100 l bis 3000 l, meist 500 l bis 2000 l, bestehen aus einer oder mehreren Schichten aus unterschiedlichsten Materialien, wie insbesondere Geweben aus synthetischen oder natürlichen Fasern oder Bändchen und Folien; häufig anzutreffen sind Kombinationen aus einem Inliner aus einem Folienmaterial, etwa einem Polyolefin, und einem Außensack aus Bändchengewebe. Die Großgebinde weisen im oberen Bereich eine verschließbare Befüllöffnung auf, welche beim Entleeren auch der Entlüftung dient, und üblicherweise mehrere Tragschlaufen, um ein Hantieren mittels Hebezeugen zu ermöglichen. Der Auslaß am Boden des Gebindes ist üblicherweise in Form eines Sackauslaufs ausgebildet, welcher im befüllten Zustand zusammengerafft und mit einer oder mehreren Kordeln zugebunden oder zugenäht ist.

Zum Entleeren von Großgebinden werden diese mittels Hebewerkzeugen über die zu befüllenden Behälter gebracht; nach dem Öffnen des Auslasses, etwa durch Lösen der zum Verschließen verwendeten Kordel, entleert sich das Großgebinde unkontrolliert. Für die staubfreie Entleerung von Bigbags mit eingezogenem Inliner sind spezielle Vorrichtungen geschaffen worden. Eine Dosierung und Teilentnahme ist mit derartigen Vorrichtungen aber nicht möglich.

Zur Dosierung von Schüttgütern aus Bigbags sind Vorrichtungen bekannt geworden, welche einen Aufnahmerahmen für den Bigbag und eine Dosiermaschine umfassen, die gemeinsam den Lastaufnehmer einer Wäge- und Dosierstation bilden. Hierbei wird ein Bigbag mittels Stapler oder Hebezeug auf die Wäge- und Dosierstation aufgesetzt; nach Öffnen des Verschlusses des Bigbags füllt sich die Dosiermaschinen-Vorkammer mit Schüttgut, so daß nach Vorgabe der Dosierparameter eine Dosierschnecke und gegebenenfalls ein Auflockerungswerk geschaltet und Schüttgut gravimetrisch ausgetragen werden kann. Derartige Vorrichtungen lassen zwar eine Dosierung zu, jedoch ist es nicht möglich, einen teilentleerten Bigbag ohne Auslaufverluste und damit erforderliche Reinigungsmaßnahmen der Dosierstation vom Aufnahmerahmen zu entfernen, um ihn an eine andere Stelle zu transportieren und dort zwischenzulagern.

Die DE-A-32 12 532 lehrt einen Transportbehälter für breiige bis pastöse oder pulverförmige Materialien. Die Vorrichtung umfaßt eine zur Beförderung mit dem Gabelstabler geeignete Palette mit einem konisch oder trichterförmig ausgebildeten Unterteil und mehreren darauf angeordneten und aus Rahmen zusammensetzbaren Kästen mit angepaßtem Kunststoffsack.

Eine dosierte Teilentleerung und Zwischenlagerung in einem Vorratslager sind insbesondere in solchen Betrieben von Bedeutung, in welchen einerseits Mehrstoffgemische, darunter auch solche, welche einzelne Stoffe nur in kleiner Menge enthalten, bereitzustellen sind, andererseits aber Qualitäts-, Kosten- und Umweltsicherungsaspekte den Bezug der Rohstoffe in Bigbags erforderlich machen. In Betrieben mit vielen Schüttgütern und/oder häufigem Produktwechsel ist es aus Kosten- und Raumgründen auch nicht möglich, für jedes im Bigbag angelieferte Produkt eine eigene Dosier- und Wägestation zu installieren.

Aus der GB-A-2 066 220 ist eine Dosierpalette für sackförmige Großgebinde bekannt, umfassend ein Stellgerüst mit Staplertaschen, daran fixierter Aufnahmeplatte mit einer darin befindlichen Öffnung und darunter einem oben offenen und an der Unterseite mit einer Dosiervorrichtung verschließbaren Behälter. Zum Öffnen wird das Gebinde aufgeschnitten.

Die FR-A-2 644 135 lehrt eine stationäre Vorrichtung zum Entleeren von Großgebinden. In der Aufnahmevorrichtung, welche den unteren Teil des Großgebindes aufnimmt, befindet sich eine Tür, durch welche das Gebinde geöffnet werden kann. Mittels maschinell einstellbarer Schlingen kann der Materialfluß reguliert werden.

Aufgabe der vorliegenden Erfindung war demgemäß die Bereitstellung einer weiteren Vorrichtung zur Aufnahme von Bigbags, worauf diese nicht nur einfach transportiert und zwischengelagert werden können, sondern mit deren Hilfe gleichzeitig eine zuverlässige und einfache dosierte Teilentnahme von Schüttgut möglich ist. Die Nachteile der vorbekannten Systeme sollten durch die neue Vorrichtung behoben werden, so daß ein häufiger Produktwechsel, eine dosierte Teilentnahme von Produkt und Zwischenlagerung von teilentleerten Bigbags der Verwendung von Bigbags nicht mehr entgegenstehen.

Die Aufgabe wird durch die erfindungsgemäße Dosierpalette gelöst. Gefunden wurde eine Dosierpalette für sackförmige Großgebinde, umfassend eine Aufnahmeplatte mit einem darunter angeordneten Stellgerüst mit Staplertaschen, wobei unter einer in der Aufnahmeplatte befindlichen Öffnung ein oben offener Behälter angeordnet ist, die dadurch gekennzeichnet ist, daß die Seitenwand des Behälters eine Vorrichtung zum Öffnen und Schließen des Behälters aufweist und die Unterseite des Behälters mit einer Dosiervorrichtung mit einer Irisblende verbunden ist.

Gemäß einer bevorzugten Ausführungsform ist die Dosierpalette zusätzlich mit einem trichterförmigen Auslaß ausgestattet.

Die Erfindung wird anhand der Figuren 1 bis 6 näher erläutert:
Figur 1 zeigt eine axonometrische Ansicht der Dosierpalette. Figur 2 zeigt eine Vorderansicht, Figur 3 eine Aufsicht, Figur 4 eine Untersicht und Figur 5 eine Seitenansicht der Dosierpalette.
Figur 6 zeigt eine Funktionsdarstellung einer Dosierstation, umfassend die erfindungsgemäße Dosierpalette mit aufgesetztem Bigbag (11) bei geöffnetem Sackauslauf, ein Hebezeug (13) mit einem Tragkreuz (12a) für den Bigbag, eine Stellplattform (16) zum Aufsetzen der Dosierpalette und darunter einen fahrbaren Behälter (14) zur Aufnahme des Schüttguts auf einer Waageplattform (17).

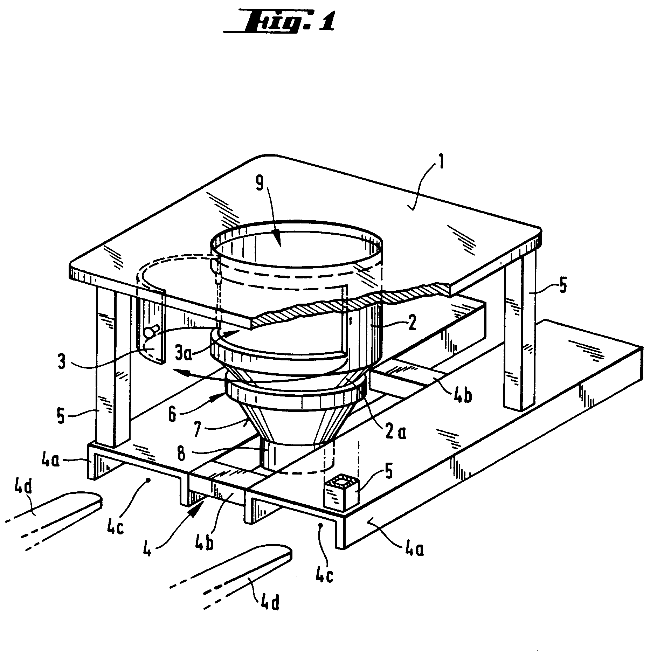

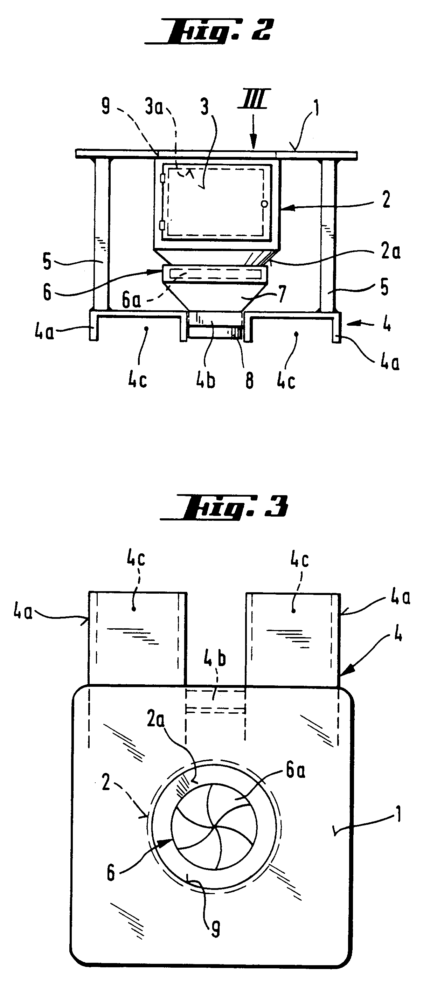

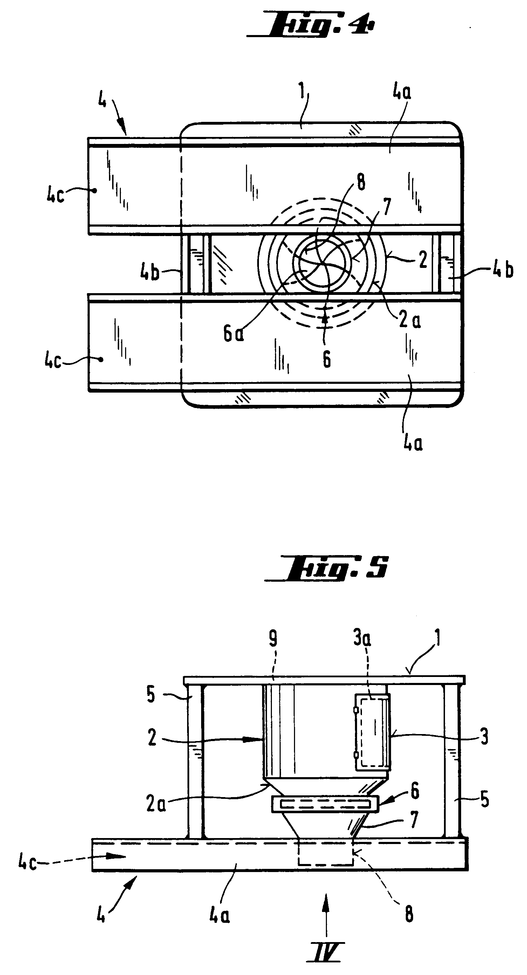

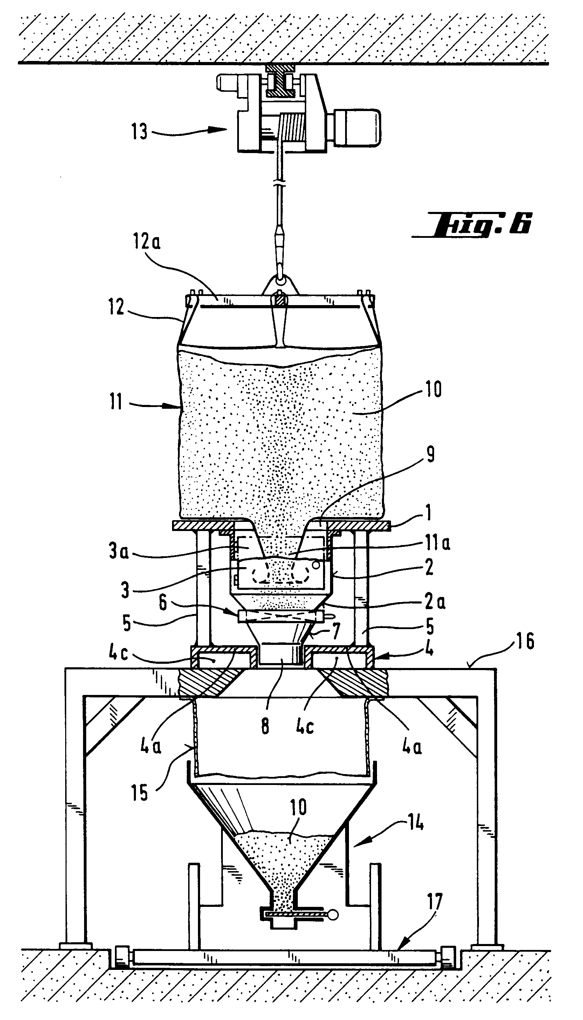

Die in den Figuren 1 bis 5 dargestellte Dosierpalette entspricht einer bevorzugten Ausführungsform: In der Aufnahmeplatte (1) befindet sich die Öffnung (9), darunter der Behälter (2) mit einer Bedienungsklappe (3), der Bedieneröffnung (3a) und einem Trichter (2a), unter diesem das Dosierorgan (6) mit einem Auslauftrichter (7) und Auslaufstutzen (8); Das Stellgerüst besteht aus einer Grundplatte (4) mit als Stützen ausgebildeten Verbindungen (5), wobei die Grundplatte aus U-Schienen (4a) und Verbindungen (4b) gebildet wird. Die Staplertaschen (4c) dienen der Aufnahme der Stapler-Gabeln (4d).

Die Aufnahmeplatte (1) mit der Öffnung für den Behälter (2) besteht bevorzugt aus einer einzigen Platte, welche aber auch durchlocht sein kann. Unter dem Begriff Aufnahmeplatte werden aber auch solche Systeme verstanden, welche aus mehreren Teilen, etwa miteinander verbundenen Latten, bestehen. Größe und Ausgestaltung der Aufnahmeplatte, welche zusätzlich seitlich angeordnete Stützelemente aufweisen kann, werden derart konstruiert, daß eine im wesentlichen ebene oder konkave (vertiefte) Fläche zur standsicheren Aufnahme des Bigbags resultiert.

Der Behälter (2) mit der mittels einer Klappe (3) oder dergleichen verschließbaren Bedienungsöffnung (3a) ist vorzugsweise als Zylinder ausgebildet; prinzipiell sind aber auch andere Formen, etwa Trichterformen oder rechteckige Ausführungen möglich. Der Durchmesser und die Höhe des Behälters werden so bemessen sein, daß in ihm eine vollständige Aufnahme des Sackauslaufs in geöffnetem und geschlossenem Zustand möglich ist, ohne daß Teile davon in die Dosiervorrichtung (6) gelangen. Die Abmessungen der Bedienungsöffnung mit der Verschließvorrichtung müssen ein problemloses Öffnen des Sackauslaufs und bei Bedarf Umkrempeln desselben sowie eines gegebenenfalls anwesenden Inliners ermöglichen. Die Unterseite des Behälters ist mit einer üblichen Dosiervorrichtung (6) verbunden; die Dosiervorrichtung stellt also den bodenseitigen Abschluß des Behälters dar.

Die Dosiervorrichtung ist in Form einer Irisblende ausgebildet. Besonders zweckmäßig umfaßt die Dosiervorrichtung (6) eine Irisblende (6a) und einen Auslauftrichter (7) und bei Bedarf auch einen Auslaufstutzen (8).

Das Stellgerüst der Dosierpalette, dessen Höhe mindestens der Bauhöhe des Behälters mit der Dosiervorrichtung entspricht, kann in beliebiger Weise ausgebildet sein, es umfaßt aber mindestens eine mit Staplertaschen (4c) versehene Grundplatte (4) und Verbindungen (5) zwischen der Grundplatte (4) und der Aufnahmeplatte (1). Beispielsweise können die Verbindungen (5) in Form von Stützen oder Stegen oder einer Seitenwand an 2 oder 3 Seiten der Palette ausgebildet sein. In der Grundplatte (4) des Stellgerüsts sind Staplertaschen (4c) angeordnet, etwa in Form von mit Verbindungsstegen (4b) verbundenen U-förmigen Schienen (4a). Die Bauart und Anordnung der Staplertaschen richtet sich nach den Maßen der zur Beförderung eingesetzten Gabelstapler oder/und anderen Flurfördergeräten.

Die Bedienung der Dosierpalette mit einem Bigbag mit oder ohne Inliner läßt sich an der Funktionsdarstellung der Figur 6 erkennen und umfaßt folgende Maßnahmen: Dosierorgan (6) der Palette, welche zuvor mittels eines Staplers auf einer Stellplattform (16) abgesetzt wurde, schließen; vollen Bigbag (11) mittels Stapler oder Hebezeug auf die Aufnahmeplatte (1) der Dosierpalette setzen, dabei den verschlossenen Auslauf des Bigbags durch die Öffnung (9) in den Behälter (2) einführen; Bedienungsklappe (3) öffnen; erste Verschnürung (nicht gezeigt) des Auslaufs lösen; bei Bedarf Bag-Auslauf durch Umfalten (Umkrempeln) der Behälterlänge anpassen; zweite Verschnürung (nicht gezeigt) des Auslaufs lösen, wobei sich der Auslauf des Bigbags (11a) und ein Teil des Behälters (2) mit Dosiergut (10) füllen; Bedienungsklappe (3) schließen; Öffnungsvorrichtung der Dosiervorrichtung, etwa die Iris-Blende (6a), dem Bedarf entsprechend öffnen und dosieren. Bei der Entleerung ist es zweckmäßig, den Bigbag straff zu halten, indem die Tragschlaufen (12) des Bigbags in ein Tragkreuz (12a) eingehängt sind und das Tragkreuz an einem Hebezeug (13) aufgehängt ist. Im Falle der Bildung von Brücken lassen sich diese durch Aktivieren des Hebezeugs beseitigen. Das Dosiergut (10) fällt in einen Behälter, etwa einen fahrbaren Wiegebehälter (14) mit einer Auslaßvorrichtung (14a), z. B. einem Schieber, der auf einer Waageplattform (17) steht; der Staubschutzvorhang (15) verhindert ein Stauben außerhalb der Dosierstation. Nach Teilentleerung des Bigbag, wird die Dosierpalette mit dem teilentleerten Bigbag nach Schließen der Dosiervorrichtung und Aushängen der Tragschlaufen mittels eines Gabelstaplers in ein Lager gebracht. Im Anschluß kann eine weitere Dosierpalette mit einem aufgesetzten vollen oder teilgefüllten Bigbag, dessen geöffnete Sacköffnung sich in Behälter (2) befindet, auf die Stellplattform abgesetzt werden; zum Dosieren braucht nur das Dosierorgan geöffnet zu werden.

Die erfindungsgemäße Dosierpalette macht es möglich, auf ihr nicht nur Bigbags zu transportieren und zu lagern, sondern beliebige Teilmengen aus Bigbags in dosierter Form zu entnehmen. Dosierpalette und Bigbag bilden eine Einheit, und zwar so lange, bis der Bigbag vollständig entleert ist. Nach der Entleerung kann der leere Bigbag ausgetauscht werden. Die Dosierpalette mit dem Bigbag kann mittels Stapler transportiert und in jedem Palettenregal gelagert werden. Reinigungsarbeiten und Materialverluste, wie sie bei vorbekannten Vorrichtungen zwangsläufig bei Produktwechsel hingenommen werden mußten, entfallen bei der Verwendung der erfindungsgemäßen Dosierpalette für Bigbags weitestgehend. Aufgrund des einfachen und wirkungsvollen Aufbaus der Dosierpalette und leichten Handhabung resultieren erhebliche Kosteneinsparungen gegenüber vorbekannten Vorrichtungen; zusätzlich werden die Qualitätssicherung und die betriebliche Logistik erleichtert.

## Patentansprüche

1. Dosierpalette für sackförmige Großgebinde, umfassend eine Aufnahmeplatte (1) mit einem darunter angeordneten Stellgerüst (4 und 5) mit Staplertaschen (4c), wobei unter einer in der Aufnahmeplatte (1) befindlichen Öffnung (9) ein oben offener Behälter (2) angeordnet ist,
dadurch gekennzeichnet,
daß die Seitenwand des Behälters eine Vorrichtung (3) zum Öffnen und Schließen des Behälters aufweist und die Unterseite des Behälters mit einer Dosiervorrichtung (6) mit einer Irisblende verbunden ist.

2. Verwendung der Dosierpalette nach Anspruch 1 zur Aufnahme von sackförmigen Großgebinden mit bodenseitigem Auslaß für fließfähige Schüttgüter und deren Entnahme in dosierter Form, wobei nach Teilentnahme die Dosierpalette zusammen mit dem Großgebinde transportiert und gelagert werden kann.

## Claims

1. A metering pallet for bag-like large receptacles, comprising a receiving plate (1) above an adjusting frame (4 and 5) with pockets (4c) for fork-lift trucks, wherein an upwardly open container (2) is disposed under an opening (9) in the receiving plate (1),
characterised in that
the side wall of the container comprises a device (3) for opening and closing the container, and the underside of the container is connected to a metering device (6) comprising an iris shutter.

2. Use of the metering pallet according to claim 1 for holding bag-like large receptacles with an outlet at the bottom for free-flowing bulk materials and withdrawal thereof in metered form, the metering pallet together with the large receptacle being transportable and storable after partial withdrawal.

## Revendications

1. Palette de dosage pour des emballages de grande capacité en forme de sac, comportant une plaque de réception (1) ayant une charpente de réglage (4 ou 5) disposée en dessous avec des poches (4c) de soulèvement, tandis qu'en dessous d'une ouverture (9) se trouvant dans la plaque réceptrice (1) est disposé un récipient (2) ouvert en haut,
caractérisée en ce que
la paroi latérale du récipient comporte un dispositif (3) pour ouvrir et fermer le récipient et la face inférieure du récipient est reliée à un dispositif doseur (6) par un diaphragme iris.

2. Utilisation de la palette de dosage selon la revendication 1 pour recevoir des grands emballages en forme de sac avec un orifice de sortie du côté du fond pour des produits en vrac aptes à l'écoulement et leur prélèvement sous forme dosée, après le prélèvement partiel la palette doseuse pouvant être transportée et stockée en commun avec le grand emballage.
